# EUROPÄISCHE PATENTANMELDUNG

(11) **EP 1 251 087 A1**
(43) Veröffentlichungstag der Anmeldung: **23.10.2002**
(21) Anmeldenummer: 02007772.3
(22) Anmeldetag: 06.04.2002
(51) Int. Cl.: B65G 53/58, B65G 53/52

(54) **Vorrichtung zur Unterstützung eines Absaugvorgangs sowie Absauganlage und Absaugverfahren**

(30) Priorität: 20.04.2001 DE 10119349
(71) Anmelder: Bruno Falkenstein GmbH, 73614 Schorndorf-Schlichten (DE)
(72) Erfinder: Falkenstein, Thomas, 73547 Lorch (DE)
(74) Vertreter: Steil, Christian, Dipl.-Ing.

(57) **Zusammenfassung**

Die Erfindung betrifft eine Vorrichtung zur Unterstützung eines Absaugvorgangs, dem über eine Saugleitung (12) ein Fluid, insbesondere eine Flüssigkeit (13) oder Luft mit davon mitgerissenen Feststoffen (110), z.B. aus Gruben oder ähnlichen schwer zugänglichen Orten angesaugt und in einer Saugrichtung (24) durch die Saugleitung (12) transportiert wird. Die Vorrichtung weist eine Druckeinheit (27; 64, 66; 108) zur Bereitstellung eines unter Druck stehenden fluidischen Mediums und ein damit verbundenes und in die Saugleitung (12) integrierbares Einleitstück (22; 62; 102) auf, über das das fluidische Mediums in der Saugrichtung (24) in die Saugleitung (12) einleitbar ist (Fig. 3).

## Beschreibung

Die Erfindung betrifft eine Vorrichtung zur Unterstützung eines Absaugvorgangs, bei dem über eine Saugleitung ein Fluid, insbesondere eine Flüssigkeit oder Luft mit davon mitgerissenen flüssigen oder festen Stoffen, angesaugt und in einer Saugrichtung durch die Saugleitung transportiert wird. Die Erfindung betrifft ferner eine Absauganlage zum Absaugen eines derartigen Fluids mit einem Ansaugaggregat zur Erzeugung eines Unterdrucks und mit einer daran angeschlossenen Saugleitung. Schließlich betrifft die Erfindung noch ein Verfahren zum Absaugen eines derartigen Fluids, insbesondere aus schwer zugänglichen Orten wie Schächten oder Gruben, bei dem über eine Saugleitung das Fluid angesaugt und in einer Saugrichtung durch die Saugleitung transportiert wird.

Um aus Gruben, Kellerräumen, Schächten oder anderen schwer zugänglichen Orten feinen Schutt, Abfälle, Wasser, Schlämme und ähnliche flüssige oder feste Stoffe zu entfernen, werden häufig Absauganlagen eingesetzt, die die zu entfernenden Stoffe über eine Saugleitung absaugen und sie, ggf. nach vorheriger Filterung, in einen Behälter einleiten oder an einen hierfür vorgesehenen Lagerort überführen. Derartige Absauganlagen weisen ein Ansaugaggregat auf, mit dem sich am stromabwärtigen Ende der Saugleitung ein Unterdruck erzeugen läßt. Das Ansaugaggregat mit den dazugehörigen Behältern, Filtern und Steuereinrichtungen ist dabei häufig in einem speziell hierfür ausgerüsteten Fahrzeug untergebracht.

Bei einem ersten Typ derartiger Absauganlagen erzeugt das Ansaugaggregat eine Luftströmung, die die zu entfernenden Stoffe, z.B. kleinere Schutteile, mitreißt und auf diese Weise durch die Saugleitung transportiert. Bei dem Ansaugaggregat kann es sich beispielsweise um ein Drehkolbengebläse handeln, mit dem sich ein Unterdruck von etwa 500 mbar erzeugen läßt. Die dadurch erzeugbare Luftströmung von größenordnungsmäßig mehreren Tausend Kubikmetern pro Stunde ermöglicht es, flüssige oder feste Stoffe aus mehreren Metern Tiefe auch über längere Saugleitungen zu transportieren.

In der Praxis hat sich allerdings gezeigt, daß bei Saugleitungen, deren Länge in der Größenordnung von etwa 15 Metern oder mehr liegt, die Luftströmung gelegentlich abreißt, wodurch der Stofftransport in der Saugleitung zum Erliegen kommt. Ursache hierfür ist, daß sich die Geschwindigkeit der Luftströmung in der langen Saugleitung aufgrund von Reibungsverlusten so weit verringert, daß sich stellenweise in der Saugleitung feste oder zähflüssige Stoffe ansammeln und sich die Saugleitung dadurch nach und nach zusetzt. Derartige Erscheinungen treten häufig etwa im letzten Drittel der Saugleitung vor dem Ansaugaggregat auf.

Bei einem anderen Typ von Absauganlagen werden als Ansaugaggregat Pumpen eingesetzt, mit denen sich Flüssigkeiten unterschiedlicher Viskosität ansaugen lassen. In der Saugleitung bildet sich eine Flüssigkeitsströmung aus, die durch den von der Pumpe erzeugten Unterdruck aufrecht erhalten wird. Bei hohen Pumpleistungen lassen sich auf diese Weise mehrere Hundert Kubikmeter Flüssigkeit pro Stunde auch aus größeren Tiefen fördern. Derartige Absauganlagen sind daher insbesondere zum Entfernen von Grundwasseransammlungen, Sedimentierschlämmen oder ölhaltigen Emulsionen geeignet.

Allerdings kann es auch bei diesem Typ von Absauganlagen bei längeren Saugleitungen oder größeren Fördertiefen dazu kommen, daß die Flüssigkeitsströmung ganz oder teilweise unterbrochen wird, weil sich die Saugleitung durch Ansammlung gröberer oder zähflüssigerer Bestandteile der zu fördernden Stoffe ganz oder teilweise zusetzt.

Bei beiden vorstehend beschriebenen Typen von Absauganlagen ist es bei einem Zusetzen der Saugleitung in der Regel erforderlich, daß der Absaugvorgang unterbrochen und dann zunächst die Stelle ermittelt wird, an der die Saugleitung zugesetzt ist. Anschließend muß die zur Zusetzung führende Ansammlung fester oder zähflüssiger Stoffe entfernt oder aufgelöst werden, was zum Beispiel bei Schlauchleitungen durch mechanisches Bearbeiten des Schlauchäußeren erfolgen kann. Bei festen Rohrleitungen kann hierzu auch ein Rückspülvorgang erforderlich sein. Nach der Wiederaufnahme des Absaugvorgangs besteht allerdings keinerlei Gewähr dafür, daß es nicht bereits nach kurzer Zeit erneut zu einer solchen Unterbrechung kommt.

Es ist daher Aufgabe der Erfindung, einen derartigen Absaugvorgang, bei dem über eine Saugleitung ein Fluid, insbesondere eine Flüssigkeit oder Luft mit davon mitgerissenen flüssigen oder festen Stoffen, angesaugt und in einer Saugrichtung durch die Saugleitung transportiert wird, insgesamt zuverlässiger zu machen. Insbesondere soll die Häufigkeit reduziert werden, mit der es bei längeren Saugleitungen und/oder höheren Saugtiefen zu einer Unterbrechung des Absaugvorgangs kommt, etwa weil sich die Saugleitung stellenweise mit abgesaugten Stoffen zugesetzt hat.

Zur Lösung dieser Aufgabe ist erfindungsgemäß eine Vorrichtung zur Unterstützung eines derartigen Absaugvorgangs vorgesehen, mit einer Druckeinheit zur Bereitstellung eines unter Druck stehenden fluidischen Mediums und mit einem damit verbundenen und in die Saugleitung integrierbaren Einleitstück, über das das fluidische Medium in der Saugrichtung in die Saugleitung einleitbar ist.

Zur Lösung dieser Aufgabe sind ferner erfindungsgemäß bei einem Verfahren der eingangs genannten Art folgende zusätzliche Schritte vorgesehen:
a) Bereitstellen eines unter Druck stehenden fluidischen Mediums;
b) zumindest zeitweises Einleiten des fluidischen Mediums in die Saugleitung über ein in diese integriertes Einleitstück.

Die Erfindung ermöglicht es, über das Einleitstück zusätzliches unter Druck stehendes fluidisches Medium in die Saugleitung einzuleiten. Dadurch erhält die in der Saugleitung geführte Luft- oder Flüssigkeitsströmung zusätzliche kinetische Energie, wodurch sich die Strömungsgeschwindigkeit in der Saugleitung erhöht. Auf diese Weise wird die Wahrscheinlichkeit, daß sich die Saugleitung infolge zu niedriger Strömungsgeschwindigkeit zusetzt und der Absaugvorgang dadurch unterbrochen wird, erheblich verringert. Das Einleitstück wird deswegen vorzugsweise derart innerhalb der Saugleitung integriert, daß es, in Saugrichtung gesehen, noch vor dem Abschnitt der Saugleitung angeordnet ist, in dem besonders häufig die Luft- oder Flüssigkeitsströmung unterbrochen wird. In vielen Fällen wird dies etwa nach der Hälfte oder nach zwei Dritteln der Saugleitung, gesehen in Saugrichtung, sein.

Durch das Einleiten unter Druck stehenden fluidischen Mediums kann es außerdem in dem Einleitstück zu einer zusätzlichen Verwirbelung kommen, durch die sich bereits gebildete Ansammlungen von in der Saugleitung geführten Stoffen wieder auflösen.

Eine erfindungsgemäße Vorrichtung zur Unterstützung eines Absaugvorgangs läßt sich problemlos bei bereits vorhandenen Absauganlagen nachrüsten. Hierzu ist lediglich das Einleitstück in die Saugleitung zu integrieren, indem diese z.B. an einer geeigneten Stelle aufgetrennt und das Einleitstück an die dadurch entstandenen Enden der Saugleitung druckdicht angeschlossen wird. Ebenso ist es natürlich möglich, anstelle einer langen Saugleitung zwei kürzere Saugleitungen zu verwenden, die über das Einleitstück miteinander verbunden sind. Ein Eingriff in die Steuerung der vorhandenen Absauganlage ist nicht erforderlich.

Bei einer bevorzugten Ausgestaltung der Erfindung weist das Einleitstück zur Messung eines darin herrschenden Druckes ein Manometer auf, das mit einer das Einleiten des fluidischen Mediums steuernden Steuereinrichtung gekoppelt ist.

Auf diese Weise kann das Einleiten zusätzlichen fluidischen Mediums von den Druckverhältnissen in der Saugleitung abhängig gemacht werden. Fällt z.B. auf der Höhe des Einleitstücks der Druck unter einen vorgegebenen Wert ab, so veranlaßt die Steuereinrichtung das Einleiten des zusätzlichen fluidischen Mediums über das Einleitstück in die Saugleitung. Dies kann beispielsweise dadurch geschehen, daß die Druckeinheit in Betrieb gesetzt wird. Die Steuereinrichtung kann dabei die Menge und/oder den Druck des eingeleiteten Mediums steuern.

Bei einer anderen bevorzugten Ausgestaltung weist das Einleitstück ein von einer Steuereinrichtung ansteuerbares Ventil auf, durch das die Menge und/oder der Druck des in die Saugleitung eingeleiteten fluidischen Mediums einstellbar ist.

Mit Hilfe eines solchen Ventils zwischen der Druckeinheit und der Saugleitung läßt sich auf besonders genaue Weise die Menge des einzuleitenden fluidischen Mediums einstellen. Die Steuereinrichtung kann beispielsweise einen Regelkreis enthalten, dessen Stellglied das Ventil und dessen Regelgröße der von dem Manometer gemessene Druck in der Saugleitung ist. Die Sollgröße des Regelkreises, d.h. der in der Saugleitung auf der Höhe des Einleitstücks aufrecht zu erhaltende Druck, ist dabei unter anderem unter Berücksichtigung der Länge der Saugleitung, der von der Saugleitung überwundenen Höhendifferenz und der Eigenschaften der anzusaugenden Stoffe zu bestimmen.

Bei einer Saugleitung, in der das angesaugte Fluid ein Gas, z.B. Luft, ist, ist das fluidische Medium vorzugsweise ebenfalls ein Gas, insbesondere Luft. Die Druckeinheit kann dann als Gebläse ausgebildet sein.

Bei einer Saugleitung, in der das angesaugte Fluid eine Flüssigkeit ist, ist das fluidische Medium hingegen vorzugsweise Wasser, Luft oder ein Wasser-Luft-Gemisch.

Welche der genannten Alternativen im Einzelfall der Vorzug zu geben ist, hängt vor allem von den Eigenschaften der in der Saugleitung transportierten Stoffe ab. Soll mit der Saugleitung beispielsweise Wasser abgesaugt werden, so wird es in der Regel ausreichen, als fluidisches Medium am Einleitstück Wasser unter Druck in die Saugleitung einzuleiten. Bei solchen viskoseren Flüssigkeiten, bei denen es leichter zur Bildung von Klumpen oder zu Materialansammlungen an der Innenseite der Saugleitung kommt, kann es sinnvoll sein, Luft oder ein Wasser-Luft-Gemisch in die Saugleitung einzuleiten, da auf diese Weise die Stoffe in der der Saugleitung stärker durchmischt werden, was zur Auflösung der Klumpen und sonstigen Materialansammlungen beiträgt.

Bei einer bevorzugten Weiterbildung dieser Ausgestaltung ist das Einleitstück als Rohrabschnitt mit einem Innenraum ausgebildet und weist wenigstens eine Düse auf, durch die das fluidische Medium in den Innenraum einspritzbar ist.

Durch die Anordnung der wenigstens einen Düse in dem Innenraum des Rohrabschnitts läßt sich die darin erzielbare Durchmischung besonders einfach festlegen.

Zur Verstärkung der Verwirbelung können in dem Innenraum außerdem Mittel zum Verwirbeln des Fluids mit dem eingespritzten fluidischen Medium angeordnet sein.

Bei diesen Mitteln kann es sich beispielsweise um kleine Leitbleche oder -gitter handeln, die an den Wänden des Innenraums angebracht sind und in diesen hineinragen. Zwar wird hierdurch ein zusätzlicher Strömungswiderstand geschaffen, doch wird dieser zum einen durch das unter Druck eingeleitete fluidische Medium ausgeglichen. Zum anderen sind es insbesondere die unerwünschten Materialansammlungen in der Saugleitung, die zu besonders hohen Strömungswiderständen führen und deren Vermeidung daher je nach Art der zu fördernden Stoffe im Vordergrund steht.

Bei einer anderen bevorzugten Ausgestaltung der Erfindung weist das Einleitstück ein Schauglas auf, durch das in einen Innenraum des Einleitstückes eingesehen werden kann.

Auf diese Weise können Bedienpersonen durch einen Blick in den Innenraum erkennen, welche Konsistenz und Strömungsgeschwindigkeit die in der Saugleitung transportierten Stoffe haben.

Dadurch läßt sich die Menge des eingeleiteten fluidischen Mediums und/oder der Druck, mit dem das Medium eingeleitet wird, gegebenenfalls noch nachträglich durch die Bedienpersonen an die beobachteten Gegebenheiten in der Saugleitung anpassen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Saugfahrzeug beim Absaugen einer Flüssigkeit aus einer Grube, welches Teile einer erfindungsgemäßen Vorrichtung zur Unterstützung des Absaugvorgangs trägt;
- Fig. 2: ein Einleitstück in einem axialen Schnitt, welches Bestandteil der in Fig. 1 gezeigten Vorrichtung ist;
- Fig. 3: ein anderes Ausführungsbeispiel für eine erfindungsgemäße Vorrichtung in einer schematischen Darstellung;
- Fig. 4: Draufsicht auf ein Einleitstück der in Fig. 3 gezeigten Vorrichtung;
- Fig. 5: Seitenansicht des Einleitstücks aus Fig. 4;
- Fig. 6: schematische Darstellung eines weiteren Ausführungsbeispiels einer erfindungsgemäßen Vorrichtung.

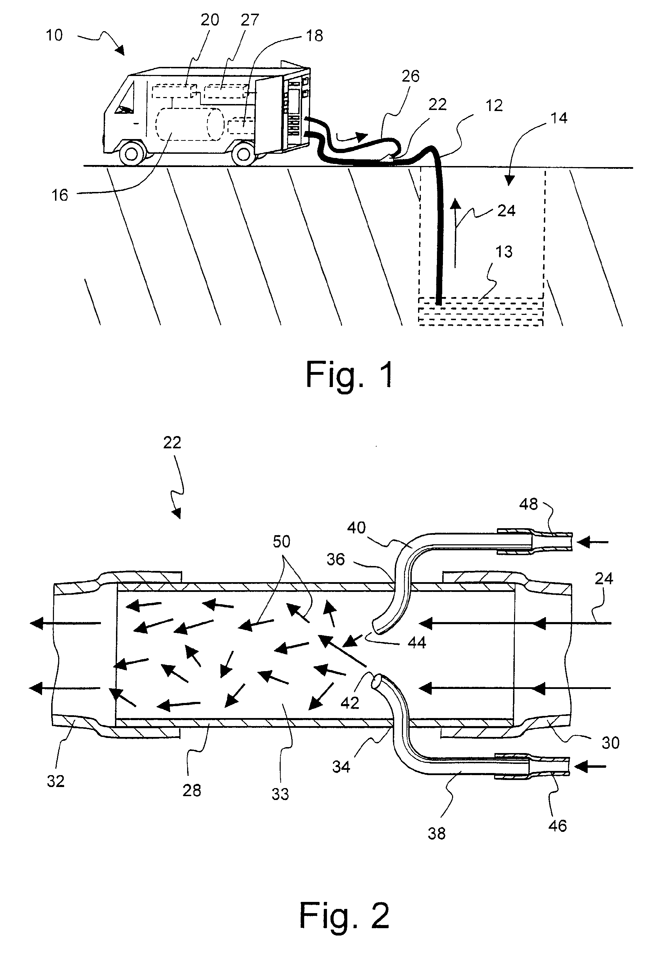

Fig. 1 zeigt ein Saugfahrzeug 10, an das eine als biegsamer Schlauch ausgebildete Saugleitung 12 angeschlossen ist. Die Saugleitung 12 ragt mit ihrem freien Ende in eine Grube 14 hinein, an deren Grund sich abzusaugendes Stoffe befinden. Bei den Stoffen handelt es sich bei diesem Ausführungsbeispiel um eine Flüssigkeit 13, z.B. Grundwasser. Die Flüssigkeit 13 wird von dem Saugfahrzeug 10 aus der Grube 14 abgesaugt und in einen in dem Saugfahrzeug 10 angeordneten Behälter 16 überführt.

In dem Saugfahrzeug 10 ist eine Pumpe 18 angeordnet, mit Hilfe derer die Flüssigkeit 13 aus der Grube 14 angesaugt wird. In dem Saugfahrzeug 10 sind außerdem schematisch mit 20 bezeichnete Filtereinrichtungen angeordnet, mit denen Verunreinigungen aus der Flüssigkeit 13 entfernt werden.

In die Saugleitung 12 ist ein Einleitstück 22 integriert, über das Wasser oder eine andere Flüssigkeit in einer mit 24 angedeuteten Saugrichtung in die Saugleitung 12 einleitbar ist. Das Wasser wird dem Einleitstück 22 über eine Zuleitung 26 von dem Saugfahrzeug 10 zugeführt. Das über die Zuleitung 26 zugeführte Wasser steht unter hohem Druck, der durch eine ebenfalls in dem Saugfahrzeug 10 angeordnete Druckeinheit erzeugt wird. Bei dieser Druckeinheit handelt es sich um eine von der Pumpe 18 unabhängige Zusatzpumpe 27.

Das über das Einleitstück 22 in die Saugleitung 12 unter hohem Druck eingeführte Wasser bewirkt, daß sich die Geschwindigkeit der aus der Grube 14 angesaugten Flüssigkeit 13 hinter dem Einleitstück 22 erhöht. Je nach Auslegung des Einleitstücks 22 kann dabei außerdem die angesaugte Flüssigkeit 13 in der Saugleitung 12 verwirbelt werden, wodurch der Ausbildung von Verklumpungen entgegenwirkt wird.

Fig. 2 zeigt ein einfaches Ausführungsbeispiel für ein Einleitstück 22, das für die in Fig. 1 gezeigte Vorrichtung geeignet ist. Das Einleitstück 22 weist einen Rohrabschnitt 28 auf, auf dessen gegenüberliegende Enden Schlauchenden 30 bzw. 32 aufgeschoben und in nicht näher dargestellter Weise befestigt sind. Durch Bohrungen 34 und 36 in dem Rohrabschnitt 28 sind mehrfach gekrümmte dünne Röhren 38 bzw. 40 in einen Innenraum 33 des Rohrabschnitts 28 eingeführt, deren Austrittsöffnungen Düsen 42 bzw. 44 bilden. Durch diese Düsen 42 und 44 wird während des Betriebes der Vorrichtung Wasser in den Innenraum 33 eingespritzt. Die Röhren 38 und 40 stehen hierzu über Schläuche 46 bzw. 48 mit einem in Fig. 2 nicht dargestellten Verteiler in Verbindung, über den über die Zuleitung 26 zugeführtes Wasser auf die beiden Schläuche 46 und 48 und damit auf die Düsen 42 und 44 verteilt wird.

Strömt durch den Rohrabschnitt 28 in der mit 24 angedeuteten Saugrichtung angesaugte Flüssigkeit hindurch, so wird diese durch das aus den Düsen 42 und 44 austretende Wasser beschleunigt und zusätzlich verwirbelt, da die Düsen 42 und 44 geneigt zu der Saugrichtung 24 in dem Innenraum 33 angeordnet sind. Diese Verwirbelung stromabwärts hinter den Düsen 42 und 44 ist durch Pfeile 50 angedeutet. Da das aus den Düsen 42 und 44 austretende Wasser unter hohem Druck steht, können durch die Verwirbelung Klumpen, die sich in der angesaugten Flüssigkeit gebildet haben, durch den Wasserdruck zerstoßen und dadurch aufgelöst werden.

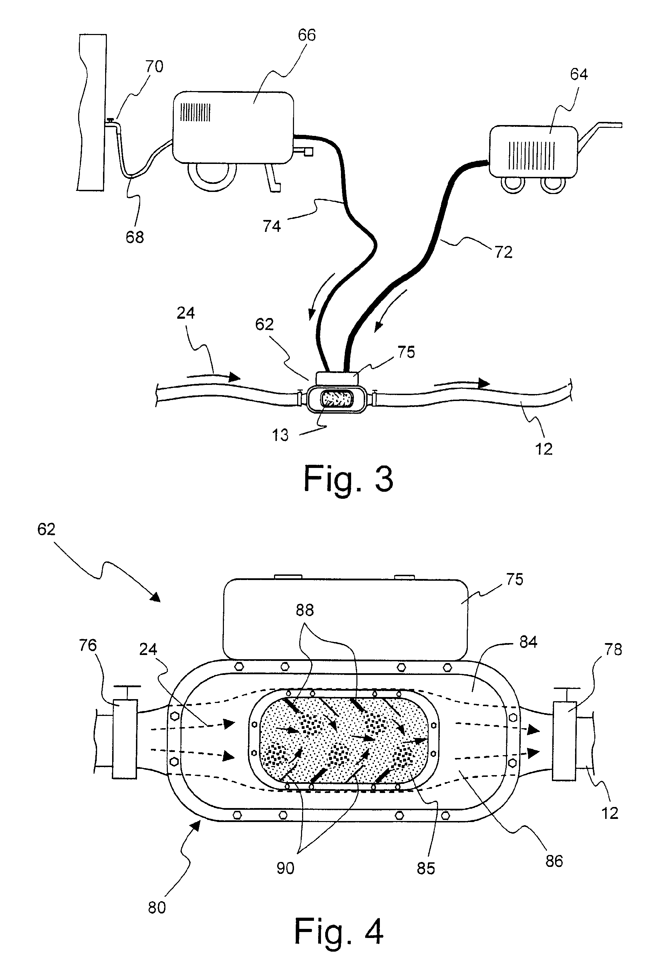

Fig. 3 zeigt ein anderes Ausführungsbeispiel für eine erfindungsgemäße Vorrichtung zur Unterstützung eines Absaugvorgangs, bei dem ebenfalls über eine Saugleitung 12 eine Flüssigkeit 13 abgesaugt wird. Anders als bei dem in den Figuren 1 und 2 gezeigten Ausführungsbeispiel wird hier zu der abgesaugten Flüssigkeit 13 nicht nur Wasser, sondern auch Druckluft über ein Einleitstück 62 in die Saugleitung 12 eingeleitet, und zwar ebenfalls in Saugrichtung 24. Die Druckeinheiten zur Erzeugung der Druckluft und des unter Druck stehenden Wassers sind bei diesem Ausführungsbeispiel außerdem nicht in einem Saugfahrzeug angeordnet, sondern als separate fahrbare Einheiten, nämlich als Kompressor 64 bzw. als Pumpeinheit 66, ausgeführt. Die Pumpeinheit 66 ist hierzu über einen Schlauch 68 mit einem Wasseranschluß 70 verbunden.

Dem Einleitstück 62 wird über eine Druckluftleitung 72 und über eine Wasserleitung 74 Druckluft bzw. unter Druck stehendes Wasser zugeführt. Gesteuert von einer dem Einleitstück 62 zugeordneten Steuereinrichtung 75 wird die Druckluft mit dem unter Druck stehenden Wasser in einem vorgebbaren Mischungsverhältnis vermischt und über Ventile in die angesaugte Flüssigkeit 13 eingespritzt.

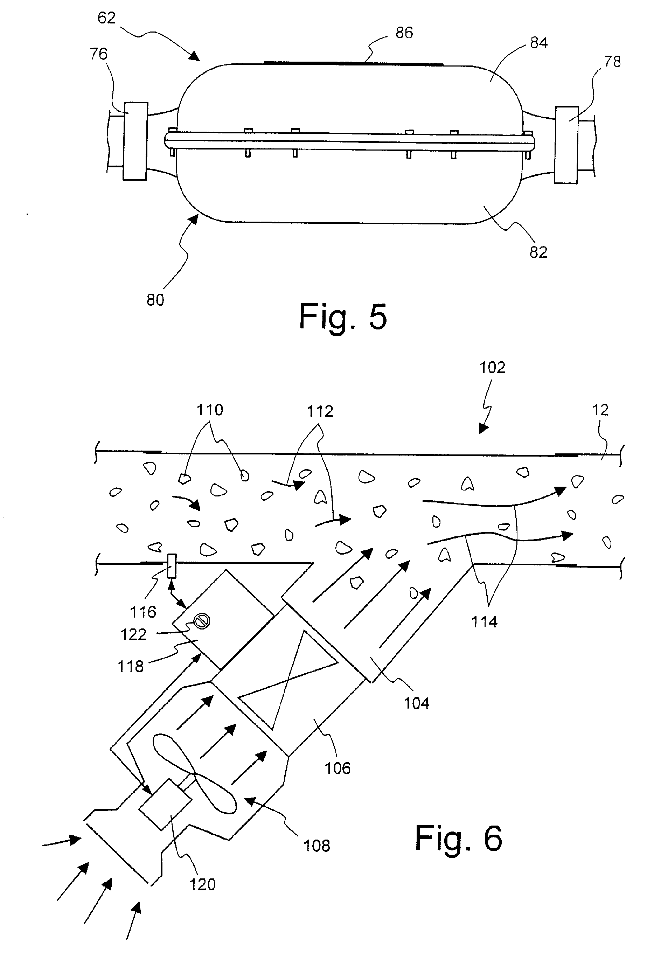

Fig. 4 zeigt das Einleitstück 62 in einer vergrößerten Darstellung. Das Einleitstück 62 weist zwei Anschlußelemente 76 und 78 auf, über die das Einleitstück 62 mit Enden der Saugleitung 12 druckdicht verbunden werden kann. Das Einleitstück 62 weist einen druckdichten Behälter 80 auf, der, wie in der Seitenansicht aus Fig. 5 erkennbar ist, aus einem Bodenteil 82 und einem darauf über eine Flanschverbindung aufgeschraubten Deckelteil 84 besteht. Das Deckelteil 84 ist mit einem Schauglas 85 versehen, durch das in einen Innenraum 86 des Behälters 80 eingesehen werden kann. Von einer Wandung des Innenraums 86, der in Fig. 4 außerhalb des Schauglasbereiches gestrichelt abgesetzt ist, ragen mehrere Düsen 88 und Ablenkbleche 90 in diesen hinein. Durch die Düsen 88 wird das unter hohem Druck stehende Wasser-Luft-Gemisch in die in der Saugleitung 12 transportierte Flüssigkeit 13 eingespritzt, wobei es ähnlich wie bei dem in Fig. 2 dargestellten Ausführungsbeispiel zu einer Verwirbelung der angesaugten Flüssigkeit 13 kommt. Die Neigung der Düsen 88 gegenüber der Saugrichtung 24 ist dabei so gewählt, daß die in der Saugleitung 12 transportierte Flüssigkeit zusätzlich durch das eingespritzte Wasser-Luft-Gemisch beschleunigt wird.

Fig. 6 zeigt in einer schematischen Darstellung ein weiteres Ausführungsbeispiel einer erfindungsgemäßen Vorrichtung zur Unterstützung eines Absaugvorgangs, bei dem über eine Saugleitung feste oder flüssige Stoffe durch eine Luftströmung transportiert werden. Bei diesen Stoffen kann es sich hier beispielsweise um kleinere Schutteile handeln, die von der Luftströmung mitgerissen und durch die Saugleitung transportiert werden.

Ein Einleitstück 102 ist bei diesem Ausführungsbeispiel im wesentlichen rohrförmig ausgebildet und mit einem seitlichen Stutzen 104 zum Einleiten zusätzlicher Druckluft versehen. An den einander gegenüberliegenden Enden des Einleitstücks 102 sind darauf aufgeschobene Enden einer Saugleitung 12 angedeutet.

An den Stutzen 104 ist über ein Ventil 106 ein von einem Antrieb 107 angetriebenes Gebläse 108 angesetzt, durch das Außenluft - gegebenenfalls nach vorheriger Filterung - je nach Stellung des Ventils 106 als Druckluft über den Stutzen 104 in die Saugleitung 12 eingeblasen werden kann. Durch diese zusätzliche Druckluft werden die Schutteile 110 beschleunigt, die in der Saugleitung 12 von der dort herrschenden Luftströmung mitgerissen und vor dem Einleiten der zusätzlichen Druckluft noch eine relativ geringe Geschwindigkeit haben. In Fig. 6 ist dies durch Pfeile 112 und 114 unterschiedlicher Länge angedeutet. Aufgrund dieser Beschleunigung kommt es in der Saugleitung 12 weniger leicht zu Ansammlungen von Schuttteilen 110, die unter Umständen einen Abriß der Luftströmung bewirken und damit zu einem Abbruch des Absaugvorgangs führen.

In dem Einleitstück 102 ist außerdem ein in Fig. 6 nur schematisch angedeutetes Manometer 116 angeordnet, das den Druck im Inneren des Einleitstücks 102 mißt, und zwar stromaufwärts des Stutzens 104. Das Manometer 116 ist mit einer Steuereinrichtung 118 gekoppelt, welche ihrerseits mit dem Antrieb 107 des Gebläses 108 sowie mit dem Ventil 106 über Steuerleitungen verbunden ist. Die Steuereinheit 118 steuert den Antrieb 107 und das Ventil 106 in Abhängigkeit von dem von dem Manometer 116 gemessenen Druck im Inneren des Einleitstückes 102.

Die Steuerung erfolgt dabei vorzugsweise so, daß bei Abfallen des vom Manometer 116 gemessenen Druckes unterhalb eines vorgegebenen Schwellenwertes der Antrieb 107 eingeschaltet und das Ventil 106 geöffnet wird. Die von dem Gebläse 108 erzeugte Druckluft gelangt dann über das Ventil 106 und den Stutzen 104 zu der in der Saugleitung 12 geführten Luftströmung und unterstützt diese beim Transport der Schutteile 110. Durch diese eingeleitete zusätzliche Luftströmung verringert sich gleichzeitig der Luftdruck im Bereich des Manometers 116, wodurch die Steuereinrichtung 118 veranlaßt wird, das Ventil 106 soweit zu schließen, bis ein gewünschter Drucksollwert erreicht wird. Auf diese Weise läßt sich ein Regelkreis aufbauen, mit dem sich innerhalb des Einleitstücks 102 ein vorgegebener Drucksollwert über längere Zeit hinweg einstellen läßt. Dieser Drucksollwert kann vorzugsweise über ein an der Steuereinrichtung 118 ausgebildetes Bedienelement 122 von einer Bedienperson vorgegeben werden. Wenn das Ventil 106 vollständig geschlossen wird, so wird automatisch auch der Antrieb 107 des Gebläses 108 von der Steuereinrichtung 118 abgeschaltet.

Es versteht sich, daß die vorstehend beschriebenen Ausführungsbeispiele lediglich illustrativen Charakter haben und nicht einschränkend für den allgemeinen Erfindungsgedanken sein sollen. So ist es selbstverständlich möglich, auch bei dem zuletzt beschriebenen Ausführungsbeispiel ein Schauglas vorzusehen, durch das in einen Innenraum des Einleitstücks 102 eingesehen werden kann. Außerdem können auch die in den Fig. 1 bis 5 gezeigten Vorrichtungen ein Manometer aufweisen, dessen Meßwerte von der Steuereinrichtung 75 ausgewertet werden.

## Patentansprüche

1. Vorrichtung zur Unterstützung eines Absaugvorgangs, bei dem über eine Saugleitung (12) ein Fluid, insbesondere eine Flüssigkeit (13) oder Luft mit davon mitgerissenen flüssigen oder festen Stoffen (110), angesaugt und in einer Saugrichtung (24) durch die Saugleitung (12) transportiert wird, mit einer Druckeinheit (27; 64, 66; 108) zur Bereitstellung eines unter Druck stehenden fluidischen Mediums und mit einem damit verbundenen und in die Saugleitung (12) integrierbaren Einleitstück (22; 62; 102), über das das fluidische Mediums in der Saugrichtung (24) in die Saugleitung (12) einleitbar ist.

2. Vorrichtung nach Anspruch 1, wobei das Einleitstück (102) zur Messung eines darin herrschenden Druckes ein Manometer (116) aufweist, das mit einer das Einleiten des fluidischen Mediums steuernden Steuereinrichtung (118) gekoppelt ist.

3. Vorrichtung nach Anspruch 1 oder 2, wobei das Einleitstück (102) ein von einer Steuereinrichtung (118) ansteuerbares Ventil (106) aufweist, durch das die Menge und/oder der Druck des in die Saugleitung (12) eingeleiteten fluidischen Mediums steuerbar ist.

4. Vorrichtung nach einem der vorhergehenden Ansprüche, wobei bei einer Saugleitung (12), in der das angesaugte Fluid ein Gas (110) ist, das fluidische Medium ebenfalls ein Gas, insbesondere Luft ist.

5. Vorrichtung nach Anspruch 4, wobei die Druckeinheit ein Gebläse (108) ist.

6. Vorrichtung nach einem der Ansprüche 1 bis 3, wobei bei einer Saugleitung (12), in der das angesaugte Fluid eine Flüssigkeit (13) ist, das fluidische Medium Wasser, Luft oder ein Wasser-Luft-Gemisch ist.

7. Vorrichtung nach einem der Ansprüche 1-6, wobei das Einleitstück (22; 62) als Rohrabschnitt mit einem Innenraum (33; 86) ausgebildet ist und wenigstens eine Düse (42, 44; 88) aufweist, durch die das fluidische Medium in den Innenraum (33; 86) einspritzbar ist.

8. Vorrichtung nach Anspruch 7, wobei in dem Innenraum (86) Mittel zum Verwirbeln des Fluids (13) mit dem eingespritzen fluidischen Medium angeordnet sind.

9. Vorrichtung nach einem der vorhergehenden Ansprüche, wobei das Einleitstück (102) ein Schauglas (85) aufweist, durch das in einen Innenraum (86) des Einleitstückes (102) eingesehen werden kann.

10. Absauganlage zum Absaugen eines Fluids, insbesondere einer Flüssigkeit (13) oder Luft mit davon mitgerissenen flüssigen oder festen Stoffen (110), mit einem Ansaugaggregat (18) zur Erzeugung eines Unterdrucks und eine daran angeschlossene Saugleitung (12), **gekennzeichnet durch** eine Vorrichtung nach einem der vorhergehenden Ansprüche.

11. Verfahren zum Absaugen eines Fluids, insbesondere einer Flüssigkeit (13) oder Luft mit davon mitgerissenen flüssigen oder festen Stoffen (110) aus schwer zugänglichen Orten wie Schächten oder Gruben (14), bei dem das Fluid über eine Saugleitung (12) angesaugt und in einer Saugrichtung (24) durch die Saugleitung (12) transportiert wird, **gekennzeichnet durch** folgende Schritte:
a) Bereitstellen eines unter Druck stehenden fluidischen Mediums;
b) zumindest zeitweises Einleiten des fluidischen Mediums in die Saugleitung (12) über ein in diese integriertes Einleitstück (22; 62; 102).
